# EUROPEAN PATENT APPLICATION

(11) **EP 4 435 760 A1**
(43) Date of publication of application: **25.09.2024**
(21) Application number: 21964712.0
(22) Date of filing: 17.11.2021
(51) Int. Cl.: G09B 9/00

(54) **MEDICAL SIMULATOR**

(71) Applicant: TMSUK Co., Ltd., Kyoto-shi, Kyoto 602-8482 (JP)
(72) Inventor: SUITA, Sachiyo, Fukuoka-shi, Fukuoka 814-0193 (JP); OZAKI, Masao, Fukuoka-shi, Fukuoka 814-0193 (JP); TAKAMOTO, Yoichi, Munakata-shi, Fukuoka 811-3502 (JP); ISHII, Yusuke, Munakata-shi, Fukuoka 811-3502 (JP); TAKIMOTO, Hiroki, Munakata-shi, Fukuoka 811-3502 (JP); IZUMI, Shota, Munakata-shi, Fukuoka 811-3502 (JP)
(74) Representative: Vossius & Partner Patentanwälte Rechtsanwälte mbB
(86) International application number: PCT/JP2021/042251
(87) International publication number: WO 2023/089696

(57) **Abstract**

A medical simulator 10 for use in a practical training of a medical action includes a robot body 11 formed by imitating a whole body of a human being as a patient. The medical simulator 10 is configured to, when a trainee performs a simulated medical action on the robot body 11, selectively reproduce, by the robot body 11, a reaction and a motion of the patient that are expected to occur before a start of, in a middle of, and after an end of a real medical action.

## Description

### TECHNICAL FIELD

The present invention relates to a medical simulator for use in practical trainings (exercises) of medical actions, such as pediatric treatments mainly including a dental treatment, an emergency treatment (basic life support), and the like.

### BACKGROUND ART

Conventionally, people engaged in medical services, such as medical students, paramedics (firemen), medical interns, etc., have performed practical trainings of medical actions including basic life supports by using various kinds of medical simulators. For example, Patent Literature 1 discloses a biological simulator provided with a patient robot (biological model) configured to simulate a heart, a circulation, biological reactions or functions including respiration. In addition, Patent Literature 2 discloses a medical simulator configured to cause a robot body to perform motions by mimicking motions of a living body when a simulated treatment is performed. Patent Literature 3 discloses a medical training device including a driving control unit that drives a patient model driving unit such that a patient model performs a motion indicating an emergency state.

### CITATION LIST

### Patent Literatures

Patent Literature 1: Japanese Patent Application Laid-Open Publication No. S55-028028
Patent Literature 2: Japanese Patent Application Laid-Open Publication No. 2004-233585
Patent Literature 3: Japanese Patent Application Laid-Open Publication No. 2014-16461

### SUMMARY OF THE INVENTION

### TECHNICAL PROBLEM

However, the biological simulator disclosed in Patent Literature 1 is intended for a training of an emergency resuscitation, and limited to simulate a heart, a circulation, biological reactions or functions including respiration. Therefore, the biological simulator is not supposed to reproduce reactions and motions of a whole body of a patient in response to various medical actions, and the biological simulator has problems of a limited use and a lack in versatility. The medical simulator disclosed in Patent Literature 2 is limited to the one in which the robot body includes a part to be treated that is formed by imitating a predetermined part of a living body, and it is not supposed to reproduce reactions and motions of a part other than the part to be treated. In addition, as a specific example of the part to be treated, only an oral cavity including artificial teeth is recited. A purpose of use other than a practical training or a test of a dental treatment, and motions in response to a medical action other than the dental treatment are not clear, and therefore, the medical simulator has problems of a limited use and a lack in versatility. Although Patent Literature 3 recites that the medical training device causes the patient model to perform a motion indicating an emergency state, this emergency state is supposed to accompany an abnormality in biological information. Therefore, it is not supposed to reproduce emotional (instinctive) reactions and motions, for example, a patient's refusal or rejection to a treatment, and motions to be reproduced are limited, which results in a problem of a lack in versatility and practicality. In addition, Patent Literatures 2 and 3 disclose that eyeballs of the robot body (patient model) are caused to move. However, the eyeballs are caused to move mechanically by using a driving unit such as a motor, an air cylinder, or the like, which results in problems such as complicated mechanism, time-consuming manufacturing, and a lack in durability and maintainability.

The present invention has been made in view of such circumstances, and it is an object of the present invention to provide a medical simulator with excellent versatility and practicality, which enables a trainee (user) to improve his or her treatment techniques as well as acquire a skill to quickly cope with an unexpected situation, a sudden incident, and the like, by selectively reproducing not only patient's reactions to a pain during a treatment and an inappropriate treatment but also various reactions and motions such as a rejecting motion or a sudden change in a condition of the patient that are expected to occur when a real medical action is performed.

### SOLUTION TO PROBLEM

A medical simulator according to the present invention that meets the above-described object is a medical simulator for use in a practical training of a medical action. The medical simulator includes a robot body formed by imitating a whole body of a human being as a patient, and is configured, when a trainee performs a simulated medical action on the robot body, to selectively reproduce, by the robot body, a reaction and a motion of a patient that are expected to occur before a start of, in a middle of, and after an end of a real medical action.

In the medical simulator according to the present invention, the reaction and the motion that are reproduced by the robot body may preferably include a rejecting motion of flapping hands and legs of the robot body, an abnormal reaction of making the robot body convulse, and eyeball movements and pupil abnormalities of left and right eyes of the robot body.

In the medical simulator according to the present invention, it may be preferable that a liquid crystal display element configured to display an image of an eyeball of an eye is attached to each of the left and right eyes, and the liquid crystal display element is curved in an arc shape such that a center portion in a width direction of the eye becomes convex toward a front side.

In the medical simulator according to the present invention, it may be preferable that the robot body includes driving means configured to drive at least each of a head part, hands, and legs of the robot body, and an air cylinder is used for the driving means.

The medical simulator according to the present invention can include instruction means configured to instruct, from an outside of the robot body, the reaction and the motion that are reproduced by the robot body.

In the medical simulator according to the present invention, the robot body can be formed by imitating a body shape of an infant of five or six years old.

### ADVANTAGEOUS EFFECTS OF INVENTION

With a medical simulator according to the present invention, when a trainee (user) such as a medical student, a paramedic (fireman), a medical intern, and the like, performs a simulated medical action on a robot body formed by imitating a whole body of a human being as a patient, it is possible to selectively reproduce a reaction and a motion of the patient that are expected to occur before a start of, in a middle of, and after an end of a real medical action, to thereby enable the trainee to not only improve his or her treatment techniques but also acquire a skill to quickly cope with an unexpected situation, a sudden incident, and the like including a sudden change in a condition of the patient.

In the medical simulator according to the present invention, in a case where the reaction and the motion that are reproduced by the robot body include a rejecting motion of flapping hands and legs of the robot body, an abnormal reaction of making the robot body convulse, and eyeball movements and pupil abnormalities of left and right eyes of the robot body, various reactions and motions of the patient that occur before the start of, in the middle of, and after the end of the real medical action can be reproduced in detail, to thereby provide an excellent functionality.

In the medical simulator according to the present invention, in a case where a liquid crystal display element configured to display an image of an eyeball of an eye is attached to each of the left and right eyes, and the liquid crystal display element is curved in an arc shape such that a center portion in a width direction of the eye becomes convex toward a front side, the eyeball movements and the pupil abnormalities can be reproduced faithfully, without using a mechanical mechanism. Such a configuration requires a smaller number of movable portions, which provides excellent operational stability and durability.

In the medical simulator according to the present invention, in a case where the robot body includes a driving means configured to drive at least each of the head part, the hands, and the legs of the robot body, and an air cylinder is used for the driving means, the whole body of the robot body can be operated like a real patient (human being) and reproducibility of various motions can be enhanced. In addition, even if the trainee presses down the head part, the hands, and the legs of the robot body, no load is applied to the driving means and no breakage of the driving means is likely to occur. Therefore, the trainee does not have to adjust his or her force and can learn how to cope with a real situation without feeling any discomfort.

In the medical simulator according to the present invention, in a case where instruction means configured to instruct, from an outside of the robot body, the reaction and the motion that are reproduced by the robot body is provided, various reactions and motions are reproduced by the robot body by an instructor or the like operating the instruction means irrespective of contents (accuracy and appropriateness) of a simulated medical action performed by the trainee, which enables the trainee to experience accidents such as sudden motions of the patient and a sudden change in the condition of the patient. Therefore, the medical simulator provides an excellent practicality.

In the medical simulator according to the present invention, in a case where the robot body is formed by imitating a body shape of an infant of five or six years old, the trainee can experience rejecting motions peculiar to infants, i.e., moving the head part in up, down, left, and right directions, and moving the hands, legs, and the whole body, in defiance of an instruction by a doctor or the like, which enables the trainee to acquire a skill to respond to such motions.

### BRIEF DESCRIPTION OF THE DRAWINGS

FIG. 1 is a block diagram showing a configuration of a medical simulator according to one embodiment of the present invention.
FIG. 2 is a block diagram showing a configuration of a robot body of the medical simulator.
FIG. 3 is a front view showing the robot body of the medical simulator.
FIG. 4 is a side view showing the robot body of the medical simulator.
FIGS. 5(A), (B), and (C) respectively illustrate, a plan view of a head part of the robot body of the medical simulator, a cross-sectional view taken along the A-A line in (A), and a cross sectional-view taken along the B-B line in (A).

### DESCRIPTION OF EMBODIMENTS

Next, description will be made on an embodiment that embodies the present invention, with reference to the attached drawings, to provide understanding of the present invention.

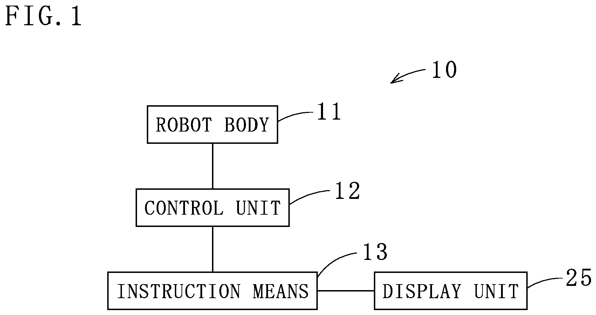

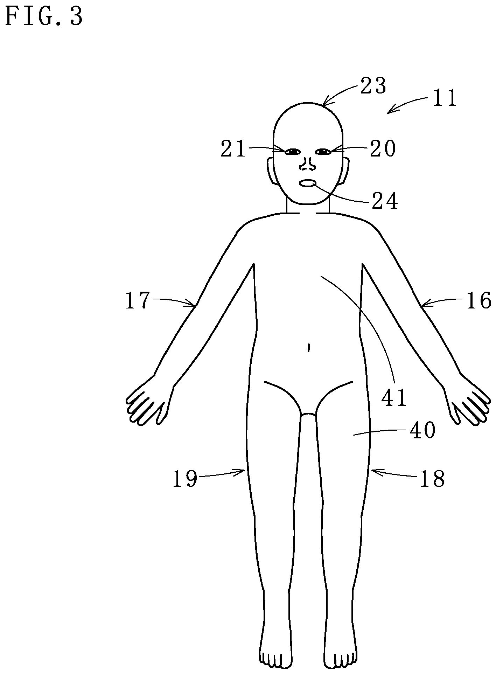

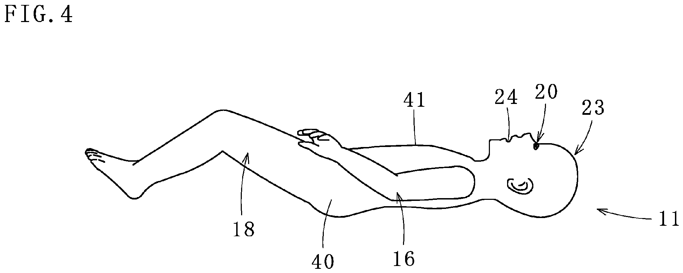

A medical simulator 10 according to one embodiment of the present invention shown in FIGS. 1 to 5 is used in practical trainings (exercises) of medical actions such as pediatric treatments mainly including a dental treatment, an emergency treatment (basic life support), and the like. As shown in FIG. 3 and FIG. 4, the medical simulator 10 includes a robot body 11 formed by imitating a whole body of a human being as a patient (for example, a body shape of an infant of five or six years old). The medical simulator is configured to, when a trainee (user), such as a medical student, a paramedic (fireman), and a medical intern, performs a simulated medical action on the robot body 11, selectively reproduce, by the robot body 11, reactions and motions of a patient that are expected to occur before the start of, in the middle of, and after the end of a real medical action.

As shown in FIG. 1, the medical simulator 10 includes a control unit 12 disposed outside the robot body 11 and configured to control the entirety (motions of the respective parts) of the robot body 11, and instruction means 13 configured to instruct the reactions and the motions that are reproduced by the robot body 11, from the outside of the robot body 11 through the control unit 12. Therefore, when a practical training is performed, various reactions and motions are reproduced by the robot body 11 by an instructor or the like giving instructions from the instruction means 13. The reactions and the motions that are reproduced by the robot body 11 include rejecting motions of flapping left and right hands 16, 17 and left and right legs 18, 19 of the robot body 11, an abnormal reaction of making the whole body of the robot body 11 convulse, and eyeball movements and pupil abnormalities of left and right eyes 20, 21 of the robot body 11. In addition, the rejecting motions include a motion of shaking a head part 23 of the robot body 11 left and right, a motion of crying, and a motion of closing a mouth 24, and the abnormal reaction includes a motion of stiffening the whole body of the robot body 11 (arching the body), a motion of twisting the body, and the like.

With the medical simulator 10, when the instructor or the like judges that the action or the like of the trainee is inappropriate while watching the state of the simulated medical action by the trainee, the instructor can instruct the robot body 11 (control unit 12) to perform motions, from the instruction means 13. Note that the instructor or the like can instruct the robot body 11 to perform motions (randomly) irrespective of the action or the like by the trainee, thereby enabling the trainee to not only improve his or her treatment techniques but also acquire the skill to cope with unexpected situations and sudden incidents (behaviors) and the like, including the sudden change in the condition of the patient. Child patients, in particular, sometimes do not follow the instructions by a doctor or the like, and take sudden (unpredictable) actions. Therefore, the trainee can perform a practical exercise. Note that various kinds of detection means such as a pressure sensitive (pressure) sensor, a contact sensor, a temperature sensor, and the like are attached to the respective parts of the robot body, and when an abnormality is detected by the detection means, the control unit enables, based on the judgement of its own, the robot body to perform the above-described reactions and motions, irrespective of the instructions from the instruction means (without receiving any instructions from the instruction means).

As the instruction means 13, a conventionally known calculator (that is, a computer) including a RAM, a CPU, a ROM, etc., is used. Furthermore, a remote control is possible by wirelessly connecting the control unit 12 and the instruction means 13, which provides an excellent practicality. However, the control unit and the instruction means may be connected with a wire.

In addition, the medical simulator 10 includes a display unit 25 configured to display changes in the simulated biological information (numerical values) such as a blood pressure, a pulse rate, a body temperature, an oxygen saturation, etc., to thereby be capable of displaying changes in the body condition of a real patient in a simulated manner. Then, the reactions and the motions that are reproduced by the robot body 11 are made correspond to the changes in the simulated biological information displayed on the display unit 25 (the simulated biological information is changed in conjunction with the reactions and the motions that are reproduced by the robot body 11), to thereby be capable of enhancing the reproducibility. In the present embodiment, the display unit 25 is connected to the instruction means 13. However, the present invention is not limited to this configuration. Note that the display unit may be integrated with the instruction means. When a laptop computer or the like is used as the instruction means, for example, there is no need to connect a display unit additionally to the instruction means.

Next, detailed description will be made on the robot body 11.

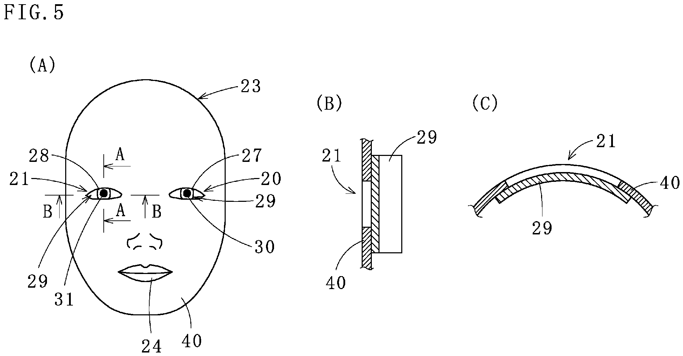

As shown in FIGS. 5 (A) to (C), liquid crystal display elements 29 are attached respectively to the left and right eyes 20, 21 of the robot body 11. The liquid crystal display elements are configured to respectively display images of the eyeballs 27, 28 of the left and right eyes 20, 21. As shown in FIGS. 5 (B) and (C), each of the liquid crystal display elements 29 is curved in an arc shape such that a center portion in a width direction of each of the left and right eyes 20, 21 becomes convex toward a front side. Eyeball movements can be reproduced by switching, as appropriate, the images of the eyeballs 27, 28 displayed respectively on the liquid crystal display elements 29 to move the eyeballs 27, 28 in up, down, left, and right directions. In addition, pupil abnormalities can be reproduced by changing the size and/or the position of each of pupils 30, 31 of the eyeballs 27, 28. The pupil abnormalities include miosis, mydriasis, anisocoria, a position abnormality (conjugation deviation of eyes), etc. The trainee checks the eyeball movements and pupil abnormalities of the left and right eyes 20, 21, to thereby grasp the simulated physical condition changes and health conditions. Then, the trainee can determine the next treatment. There is no need to move the eyeballs themselves mechanically in up, down, left, and right directions, as required in conventional devices, and the eyeball movements can be reproduced only by switching the images displayed on each of the liquid crystal display elements 29. Therefore, the structure of the left and right eyes 20, 21 can be simplified. In addition, the pupil abnormalities, which had been difficult to be reproduced by the conventional mechanical motions, can be easily reproduced, to thereby provide an excellent practicality. Note that the images of the eyeballs 27, 28 to be displayed on the liquid crystal display elements 29 are stored in storage means (not shown), such as a hard disk, an SD card, etc., incorporated or connected to the control unit 12, from which the images are selected as appropriate to be used.

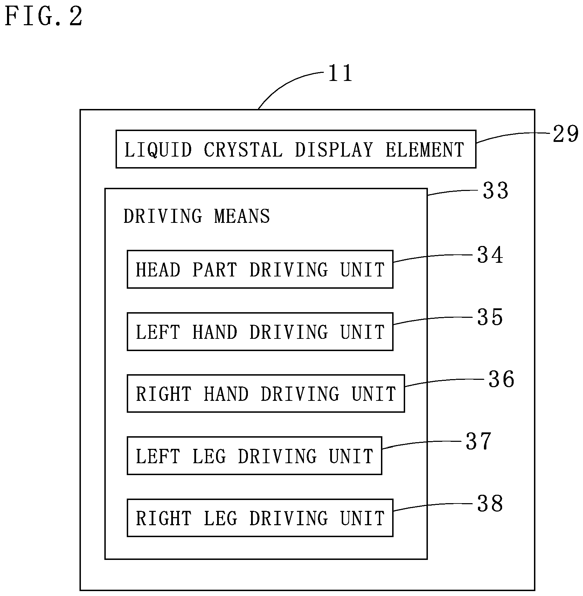

As shown in FIG. 2, the robot body 11 includes driving means 33 configured to drive each of the head part 23, the left and right hands 16, 17, and the left and right legs 18, 19 of the robot body 11. The driving means 33 includes a head part driving unit 34, a left hand driving unit 35, a right hand driving unit 36, a left leg driving unit 37, and a right leg driving unit 38. The driving units 34 to 38 are capable of independently driving the head part 23, the left and right hands 16, 17, and the left and right legs 18, 19, respectively. The head part driving unit 34 is capable of performing a motion of tilting the head part 23 back and forth and left and right, and a motion of shaking the head part 23 left and right (a motion of moving the head part 23 rotationally about the neck in the left and right directions). In addition, the left hand driving unit 35, the right hand driving unit 36, the left leg driving unit 37, and the right leg driving unit 38 are capable of respectively performing motions of bending and stretching the left and right hands 16, 17, and the left and right legs 18, 19. The timings and combination of the motions of the respective parts can be used to express the rejecting motions of flapping the left and right hands 16, 17 and the left and right legs 18, 19, the abnormal reaction of making the robot body 11 (whole body) convulse, and the like.

Air cylinders may preferably be used for the driving means 33 (the head part driving unit 34, the left hand driving unit 35, the right hand driving unit 36, the left leg driving unit 37, and the right leg driving unit 38), and the number and arrangement of the air cylinders used for the respective driving units 34 to 38 can be appropriately selected. Note that, when the air cylinders are used for the driving means, air is supplied from an air compressor (not shown) disposed outside the robot body to each of the air cylinders.

The whole body of the robot body 11 is covered with a covering member 40 made of a soft rubber material such as silicone having flexibility and elasticity. The covering member 40 protects the driving means 33, and enables smooth motions of the head part 23, the left and right hands 16, 17, and the left and right legs 18, 19, which are driven by the driving means 33. In addition, when the rejecting motions of flapping the left and right hands 16, 17 and the left and right legs 18, 19, or the abnormal reaction of making the robot body 11 (whole body) convulse is performed, even if the trainee presses down the left and right hands 16, 17 and the left and right legs 18, 19 in the same manner as in the real situation, since the air cylinders are used for the driving means 33, only the compression state of the air in the air cylinders changes, no load is applied to the driving means 33, and no breakage or malfunction of the driving means 33 occur. Therefore, the trainee does not have to adjust his or her force and can learn how to cope with the real situation without feeling any discomfort.

Note that the driving means may include a mouth driving unit (not shown), to thereby enable opening and closing motions of the mouth to be performed. In that case, a preferable mechanism to be used is such that the head part includes an upper jaw skeleton portion and a lower jaw skeleton portion and is covered with a covering member, the mouth driving unit is connected to the lower jaw skeleton portion, and the mouth is opened and closed by rotationally moving the lower jaw skeleton portion with respect to the upper jaw skeleton portion. An air cylinder may be used for the mouth driving unit similarly as for other driving units, or a motor or another actuator may be used.

FIG. 3 and FIG. 4 illustrate only the robot body 11. However, the robot body 11 can be used by attaching a wig to the head part 23, or making the body wear clothes, as needed. In addition, the robot body 11 can reproduce beating of the heart or respiratory condition by vibrating a chest part 41 (vibrating the chest part 41 in the front-back direction of the body of the robot body 11 and the up-down direction in FIG. 4) by chest part driving means (not shown) incorporated in the chest part 41.

At this time, also a cardiac sound and a respiratory sound can be produced from a speaker (not shown) incorporated in the chest part 41. Furthermore, by emitting light from a light-emitting portion (not shown) including an LED or the like, which is incorporated in (inside the face of) the head part 23, the facial color can be changed to reproduce a pale expression, a ruddy face, cyanosis, and the like.

With the above-described motions of the respective parts of the robot body 11, a simulated cardiac arrest state can be reproduced, which enables the trainee to perform the practical training of basic life support by using the medical simulator 10. When the instructor judges that a proper treatment is performed, the instructor gives instructions to restart the beating of the heart and the respiratory motion to the robot body 11 (control unit 12) from the instruction means 13. In response to such instructions, the cardiac sound and the respiratory sound are produced. Note that instead of the instructor judging that the proper treatment has been performed, the pressure sensor in the robot body 11 may be used, for example, to detect that a cardiac massage has been performed properly.

Description has been made above on the embodiment of the present invention. However, the present invention is not limited to any of the configurations recited in the embodiment as described above, and may include other embodiments and modifications within a range of the subject matters recited in claims.

For example, a dental cast for a dental treatment exercise can be attached to the inside of the mouth of the robot body. At this time, an upper dental cast and a lower dental cast are configured to be detachable (replaceable) with respect to the upper jaw skeleton portion and the lower jaw skeleton portion as described above, to thereby enable the dental cast worn out in the practical training to be replaced with a new dental cast, as appropriate.

In addition, a speaker is attached to the robot body (inside the mouth, for example), to enable answer words to be uttered in response to an inquiry from the trainee. At this time, it may be preferable that the answer words are stored in advance, as voice data, in the storage means in the control unit, and selected, as appropriate, to be reproduced in response to an instruction from the instruction means. Furthermore, when the detection means, such as the pressure sensor or the temperature sensor, attached to the robot body detect abnormalities such as a pressure abnormality, a temperature abnormality, etc., the words like "ouch", "hot", "cold" and the like may be uttered based on the judgment by the control unit.

The reactions and motions of the patient that are expected to occur before the start of, in the middle of, and after the end of a real medical action are various, and addition and update of the reactions and motions can be performed as needed with the instruction means and/or the control unit.

The robot body can be changed in its position (posture) and used in the position sitting on a chair or lying on an examination table or a bed, depending on the contents of the practical training (types of medical actions).

In the above-described embodiment, description has been made on the case where the robot body is formed by imitating the body shape (whole body) of an infant of five or six years old. However, the present invention is not limited to the case. In addition, in the above-described embodiment, the control unit is disposed outside the robot body. However, the control unit can be incorporated in the robot body. Furthermore, the reactions and the motions that are reproduced by the robot body can be stored in the control unit in advance, and one or a plurality of reactions and motions can be selected from the stored reactions and the motions, to be reproduced automatically by the robot body during the practical training. At this time, the number (types), the combination, the generation order, the generation interval, and the like of the reactions and motions that are reproduced by the robot body can be selected as appropriate, and may be set (programmed) in the control unit in advance, or may be selected randomly by the control unit. In such cases, it may be preferable to be switchable whether the reactions and motions are reproduced by the robot body in accordance with the setting or selection by the control unit or the reactions and the motions are reproduced by the robot body according to the instructions from the instruction means. However, the instruction means can be omitted.

### INDUSTRIAL APPLICABILITY

People engaged in medical services, such as medical students, paramedics (firemen), medical interns, etc., perform practical trainings (exercises) of medical actions by using the medical simulator according to the present invention, to thereby be capable of not only improving their treatment techniques but also acquiring skills to quickly cope with unexpected situations, sudden incidents, and the like that occur at the scenes of actual medical actions. Therefore, the present invention can broadly contribute to a development of medical technologies.

### REFERENCE SIGNS LIST

10: medical simulator
11: robot body
12: control unit
13: instruction means
16, 17: hand
18, 19: leg
20, 21: eye
23: head part
24: mouth
25: display unit
27, 28: eyeball
29: liquid crystal display element
30, 31: pupil
33: driving means
34: head part driving unit
35: left hand driving unit
36: right hand driving unit
37: left leg driving unit
38: right leg driving unit
40: covering member
41: chest part

## Claims

1. A medical simulator for use in a practical training of a medical action, the medical simulator comprising,
a robot body formed by imitating a whole body of a human being as a patient,
the medical simulator being configured to, when a trainee performs a simulated medical action on the robot body, selectively reproduce, by the robot body, a reaction and a motion of the patient that are expected to occur before a start of, in a middle of, and after an end of a real medical action.

2. The medical simulator according to claim 1, wherein the reaction and the motion that are reproduced by the robot body include a rejecting motion of flapping hands and legs of the robot body, an abnormal reaction of making the robot body convulse, and eyeball movements and pupil abnormalities of left and right eyes of the robot body.

3. The medical simulator according to claim 2, wherein a liquid crystal display element configured to display an image of an eyeball of an eye is attached to each of the left and right eyes, and the liquid crystal display element is curved in an arc shape such that a center portion in a width direction of the eye becomes convex toward a front side.

4. The medical simulator according to any one of claims 1 to 3, wherein the robot body is provided with driving means configured to drive at least each of a head part, hands, and legs of the robot body, and an air cylinder is used for the driving means.

5. The medical simulator according to any one of claims 1 to 4, further comprising instruction means configured to instruct, from an outside of the robot body, the reaction and the motion that are reproduced by the robot body.

6. The medical simulator according to any one of claims 1 to 5, wherein the robot body is formed by imitating a body shape of an infant of five or six years old.
